# EUROPEAN PATENT SPECIFICATION

(11) **EP 0 518 157 B1**
(45) Date of publication and mention of the grant of the patent: **14.12.1994**
(21) Application number: 92109202.9
(22) Date of filing: 01.06.1992
(51) Int. Cl.: G01P 3/44

(54) **Magnetised ring for the protection of speed detection devices**
Magnetisierter Ring zum Schützen von Geschwindigkeitsmessaufnehmern
Aimant annulaire pour la protection de dispositifs de mesure de la vitesse

(30) Priority: 12.06.1991 IT TO910449
(43) Date of publication of application: 16.12.1992
(73) Proprietor: SKF INDUSTRIE S.P.A., I-10123 Torino (IT)
(72) Inventor: Vignotto, Angelo, I-10134 Torino (IT); Rigaux, Christian, F-37260 Artannes Sur Indre (FR)
(74) Representative: Lotti, Giorgio

(56) References cited:
- EP-A- 0 420 040
- FR-A- 2 574 501
- US-A- 3 772 549

## Description

The present invention lies in the field of devices for detecting the speed of rotation between two relatively rotatable members, such as the support members for vehicle wheels. More particularly, the subject of the present invention is a magnetised ring for retaining ferrous particles for the protection of devices for detecting the speed of rotation.

Modern monitoring circuits, especially the type known as ABS, installed close to the bearing rings, are generally provided with basic components such as: phonic wheel, detecting sensor, on board computer and hydrodynamic central control unit. High precision detection systems are involved, for which reason it is necessary to provide protection devices operable to ensure an optimum functioning. A good protection against external contamination agents is a requirement which must necessarily be satisfied in order to guarantee a good functioning of such detection systems over time.

Monitoring circuits of the said type have the disadvantage that the phonic wheel, constituted by a multipolar magnetised ring attracts towards itself the ferrous particles coming from the vicinity of the brake disc. With the passage of time the ferrous particles can form a deposit such as to undermine the correct functioning of the sensor and therefore of the detection system.

Various protection devices have already been proposed, such as that described in Italian utility model TO91U00034 of the same proprietor, in which there is described a containment shell for the detection system provided with a tongue which restricts the access path to the phonic wheel and the coil against contaminating particles.

This tongue does not however constitute a complete remedy for the problem of ferrous particles; it is therefore the object of the present invention to provide a device which eliminates the problems of contamination by such particles.

For this and other purposes which will become understood hereinbelow, the invention provides a magnetised ring for retaining ferrous particles for the protection of a device for detecting the speed of rotation between a rotatable member and a stationary member, said detection device being arranged within a chamber having an opening representing the only access to said chamber for ferrous particles; the magnetised ring being mounted to one of the two relatively rotatable members, outside the chamber and close to said opening of the chamber, whereby the magnetised ring attracts ferrous particles and prevents them from entering the chamber.

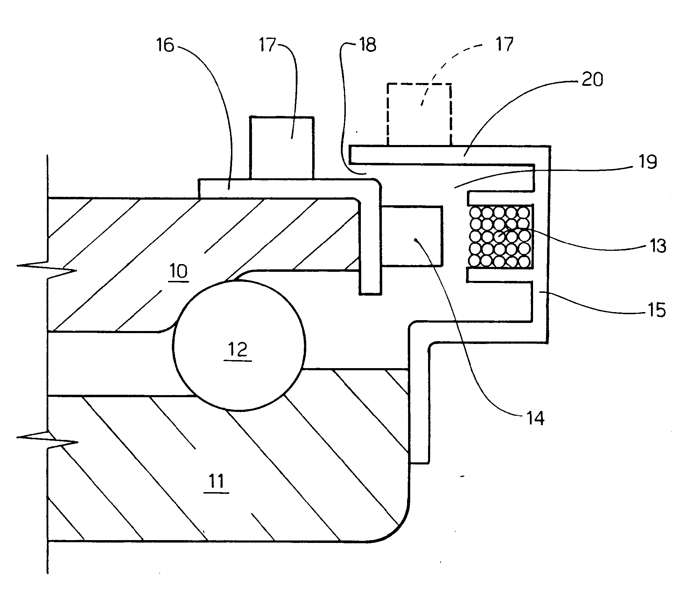

A preferred, but not-limiting embodiment of the magnetised ring which constitutes the subject of the present invention will now be described by making reference to the attached drawing which is a vertical section through a rolling element bearing for the support of a vehicle wheel, provided with the magnetised ring which is proposed here.

Making reference to the drawing, there is illustrated a ball bearing constituted by an outer rotating ring 10, a fixed ring 11 and one or more rings of balls 12.

The detection system is composed of a sensor 13 and a phonic wheel 14. The sensor 13 is constituted by a coil driven by the change in flux generated by the multipolar phonic wheel and contained in a screen 15 secured to the fixed inner ring 11. The phonic wheel 14, which faces the sensor 13, is on the other hand constituted by a magnetised ring supported by an L-section ring or screen 16 secured to the outer rotating ring 10.

A magnetised ring 17, preferably made of magnetised plastics or rubber, of the same type as utilised for the production of the wheel 14, is positioned close to the opening 18 by means of which the chamber 19, containing the phonic wheel 14 and the coil 13, communicates with the exterior.

The opening 18 represents the only access path to the chamber 19 for the ferrous particles generated by the brake discs (not illustrated). These particles, which would tend to make their way towards the phonic wheel 14, are however attracted and maintained on the magnetised ring 17; this prevents the particles from becoming deposited on the phonic wheel and thus forming with the passage of time a deposit such as to alter the magnetic flux generated by the phonic wheel 14 and cutting the coil 13.

In a constructional variant not illustrated the screen 15 which carries the coil 13 could be provided with a protective tongue to restrict further the opening 18 for the purpose of rendering access for the ferrous particles and other contaminating agents such as dust and mud even more difficult.

In the constructional version described the magnetised ring 17 is fixed to the outer rotating ring 10 of the bearing, surrounding it for the whole of its circumferential extent.

This configuration is not however the only possible one; in fact the magnetised ring could be mounted fixedly to the inner fixed ring 11 achieving the same advantages offered by the illustrated version. It could also be fitted on the projecting end of the tongue 20 of the screen 15 as shown in broken outline in the drawing. It is evident, however, since many other configurations of the assembly comprising the screen 15, the sensor 13 and the phonic wheel 14, are possible, that the position of the magnetised ring 17 will depend largely on this configuration, the constructional and functional requirements of the ring itself remaining that it be located at the entrance to the chamber defined by this assembly.

## Claims

1. A magnetised ring (17) for retaining ferrous particles for the protection of a device (13, 14) for detecting the speed of rotation between a rotatable member (10) and a stationary member (11), said detection device (13, 14) being arranged within a chamber (19) having an opening (18) representing the only access to said chamber (19) for ferrous particles; the magnetised ring (17) being mounted to one of the two relatively rotatable members (10, 11), outside the chamber (19) and close to said opening (18) of the chamber, whereby the magnetised ring (17) attracts ferrous particles and prevents them from entering the chamber (19).

2. A ring (17) according to claim 1, characterised in that it is mounted to the rotatable member (10) with the interposition of a ring or screen (16) having a radial L-shape cross section.

3. A ring (17) according to claim 1, characterised in that it is mounted fixedly to said stationary member (11).

4. A ring (17) according to claim 3, characterised in that it is mounted to said stationary member (11) with the interposition of a screen (15) on which the sensor (13) of said detection device is mounted.

5. A ring (17) according to claim 1, characterised in that it is made of magnetised plastics or rubber.

## Patentansprüche

1. Magnetisierter Ring (17) zum Zurückhalten von Eisenpartikeln zum Schutz einer Einrichtung (13, 14) zum Erfassen der Rotationsgeschwindigkeit zwischen einem drehbaren Bauteil (10) und einem stationären Bauteil (11), wobei die Erfassungseinrichtung (13, 14) innerhalb einer Kammer (19) angeordnet ist, die eine Öffnung (18) aufweist, die für Eisenpartikeln den einzigen Zugang zur Kammer (19) darstellt; der magnetisierte Ring (17) ist an einem der beiden relativ drehbaren Bauteile (10, 11) außerhalb der Kammer (19) und in der Nähe der Öffnung (18) der Kammer befestigt, wobei der magnetisierte Ring (17) Eisenpartikel anzieht und diese daran hindert, in die Kammer (19) einzudringen.

2. Magnetisierter Ring (17) nach Anspruch 1, dadurch gekennzeichnet, daß er an dem drehbaren Bauteil (10) mit der Zwischenposition eines Ringes oder Blende (16) befestigt ist, die einen radialen, L-förmigen Querschnitt aufweist.

3. Magnetisierter Ring (17) nach Anspruch 1, dadurch gekennzeichnet, daß dieser starr an dem stationären Bauteil (11) befestigt ist.

4. Magnetisierter Ring (17) nach Anspruch 3, dadurch gekennzeichnet, daß er an dem stationären Bauteil (11) mit der Zwischenposition einer Blende (15) befestigt ist, auf der der Sensor (13) der Erfassungseinheit befestigt ist.

5. Magnetisierter Ring (17) nach Anspruch 1, dadurch gekennzeichnet, daß er aus einem magnetisierten Plastik oder Gummi hergestellt ist.

## Revendications

1. Anneau magnétisé (17) pour retenir des particules ferreuses en vue de la protection d'un dispositif (13, 14) de détection de la vitesse de rotation entre un élément tournant (10) et un élément fixe (11), le dispositif de détection (13, 14) étant disposé à l'intérieur d'une chambre (19) qui possède une ouverture (18) qui est l'accès unique à ladite chambre (19) pour les particules ferreuses, l'anneau magnétisé (17) étant monté sur l'un des deux éléments (10, 11) en rotation relative, à l'extérieur de la chambre (19) et à proximité de l'ouverture (18) de la chambre, de sorte que l'anneau magnétisé (17) attire les particules ferreuses et empêche leur pénétration dans la chambre (19).

2. Anneau (17) selon la revendication 1, caractérisé en ce qu'il est monté sur l'élément tournant (10) avec interposition d'un anneau ou écran (16) dont la section radiale est en forme de L.

3. Anneau (17) selon la revendication 1, caractérisé en ce qu'il est monté rigidement sur l'élément stationnaire (11).

4. Anneau (17) selon la revendication 3, caractérisé en ce qu'il est monté sur l'élément stationnaire (11) avec interposition d'un écran (15) sur lequel le capteur (13) du dispositif de détection est monté.

5. Anneau (17) selon la revendication 1, caractérisé en ce qu'il est fait en caoutchouc ou matière plastique magnétisée.
